Europäisches Patentamt

European Patent Office

Office européen des brevets

(19)

(11) Numéro de publication: **0 104 127 B1**

## FASCICULE DE BREVET EUROPEEN

(12)

(45) Date de publication de fascicule du brevet:
**26.06.91**

(51) Int. Cl.⁵: **B62K 17/00, B62H 1/12**

(21) Numéro de dépôt: **83450020.9**

(22) Date de dépôt: **28.07.83**

(54) Véhicule à conduite intérieure de faibles dimensions extérieures.

(30) Priorité: **28.07.82 FR 8213298**

(43) Date de publication de la demande:
**28.03.84 Bulletin 84/13**

(45) Mention de la délivrance du brevet:
**26.06.91 Bulletin 91/26**

(84) Etats contractants désignés:
**AT BE CH DE FR GB IT LI LU NL SE**

(56) Documents cités:
CH-A- 108 170      FR-A- 2 070 627
FR-A- 2 399 354    FR-A- 2 467 133
GB-A- 158 570      US-A- 1 817 848

(73) Titulaire: **Péré, Pierre**
**19 rue du temple**
**F-33000 Bordeaux(FR)**

(72) Inventeur: **Péré, Pierre**
**19 rue du temple**
**F-33000 Bordeaux(FR)**

Rank Xerox (UK) Business Services

## Description

La présente invention concerne un dispositif de stabilisation d'un véhicule selon le préambule de la revendication 1, ce véhicule étant entièrement carrossé et possédant la maniabilité et les dimensions extérieures horizontales d'un cyclomoteur ou d'une motocyclette à deux roues porteuses.

Il existe un grand nombre de modèles de véhicules de petites dimensions sur le marché actuel, en particulier les voiturettes de 49,9 cm3 de cylindrée mais toutes ont l'inconvénient d'avoir quatre roues porteuses ou au minimum trois, dont l'espacement est nécessairement de un mètre de façon à ce que l'équilibre du véhicule soit assuré pendant la marche, portant ainsi la largeur totale minimale à 1,20 m. Ces véhicules ont d'autre part un poids assez important et n'ont pas la maniabilité ni la nervosité souhaitée du fait de pertes importantes provoquées par les frottements dûs au nombre de roues et aux dispositifs mécaniques complexes nécessaires.

Des dispositifs représentant l'arrière plan technologique ont été conçus, notamment en 1920 d'après GB-A-158 570 qui montrent des stabilisateurs actionnés par un levier à main, dispositif qui avait été repris dans d'autres brevets de la même période mais qui présentait l'inconvénient d'une manoeuvre difficile en n'utilisant pas les réflexes naturels de pose des pieds pour le maintien de l'équilibre sur un véhicule à deux roues.

Il existe également d'autres brevets plus récents, par exemple FR-A-2 467 133 ou FR-A-2 399 354, ce dernier divulguant les caractéristiques du préambule de la revendication 1, faisant état de dispositifs de stabilisation actionnés par les pieds du conducteur mais à l'aide de dispositifs hydrauliques complexes et en omettant le problème de la détérioration possible de ces stabilisateurs dans le cas de heurt par contact brutal des roues avec le sol pendant la marche.

Le dispositif selon l'invention, tel qu'il est caractérisé par la partie caractérisante de la revendication 1, permet d'éviter le blocage des stabilisateurs au démarrage sur route en mauvais état, et de parvenir à ce que le centre de gravité de l'ensemble se trouve toujours à l'intérieur de l'espace compris entre les roues porteuses et les stabilisateurs, quel que soit le gîte donné.

Le véhicule équipé du dispositif selon l'invention permet un encombrement minimal car sa largeur maximale est de 0,85 m sur une longueur de 1,70 m grâce à deux stabilisateurs rétractables actionnés par les pieds du conducteur lorsqu'il le juge nécessaire pour maintenir l'équilibre de son véhicule, notamment à faible vitesse et à l'arrêt étant donné qu'il roule normalement uniquement sur deux roues.

La force d'appui provoquée par la pression volontaire des pieds du conducteur peut se faire soit directement sur les supports des stabilisateurs, soit par l'intermédiaire d'un levier démultiplicateur, (formule qui a été adoptée dans la description technique), permettant à tout moment au conducteur d'être entièrement maître du gîte de son véhicule et d'avoir ainsi une conduite identique à celle d'un cyclomoteur ou d'une motocyclette.

Les deux stabilisateurs peuvent être maintenus baissés à l'aide d'un levier agissant sur les leviers de démultiplication, à trois positions principales : position " route " avec libération totale du levier maintenant une position basse - position "parking " avec pression sur le levier maintenant une position basse - position " frein de secours " avec action sur un cable relié à des freins situés au niveau des roulettes stabilisatrices.

Le fait que ces stabilisateurs soient indépendants est spécialement intéressant dans le cas de vent latéral car l'action sur le côté opposé à ce vent permet au véhicule d'être en position adaptée par rapport à la route sans qu'il soit nécessaire d'agir sur la direction. De même, dans les virages, le gîte donné au véhicule peut être graduellement dosé suivant la force que l'on applique au stabilisateur situé à l'intérieur de la courbe. Egalement, en cas de fausse manoeuvre, notamment lorsque l'inclinaison donnée au véhicule dans un virage est insuffisante, le stabilisateur opposé au centre du virage peut être actionné pour contrebalancer la force centrifuge. Enfin le fait que les stabilisateurs se relèvent en s'écartant de l'axe du véhicule est particulièrement important car il permet à l'ensemble de rouler, même avec un gîte maximum, et au conducteur de rétablir progressivement l'équilibre par la simple pression du pied, qui est un réflexe naturel.

Les roulettes des stabilisateurs qui entrent en contact avec le sol sont à dispositif directionnel de manière à ne pas créer de vibrations ou contrecarrer les roues porteuses, mais elles peuvent être remplacées par des patins fixes pour la conduite sur routes enneigées.

La position du conducteur à l'intérieur du véhicule est identique à celle d'un pilote d'automobile de sport, à savoir que ses jambes sont allongées vers l'avant et le corps légèrement penché vers l'arrière, les pieds reposant pendant la marche sur des cale-pieds placés de telle manière que les leviers de démultiplication pour l'abaissement des roues stabilisatrices puissent être actionnés par le simple poids de ces pieds, sans aucune fatigue possible.

Il doit être enfin remarqué que la présente invention peut être adaptée sur un chassis classique de cyclomoteur ou de motocyclette sous réserve qu'il possède un cadre évidé dans sa partie centrale de façon à permettre l'assise du conducteur à cet endroit, tous les autres organes étant classiques.

Ce dernier point est très important car il est possible d'utiliser certains produits de chaînes de cyclomoteurs du marché actuel sans modifications de la structure de ces derniers.

Les planches qui suivent décrivant l'invention sont:

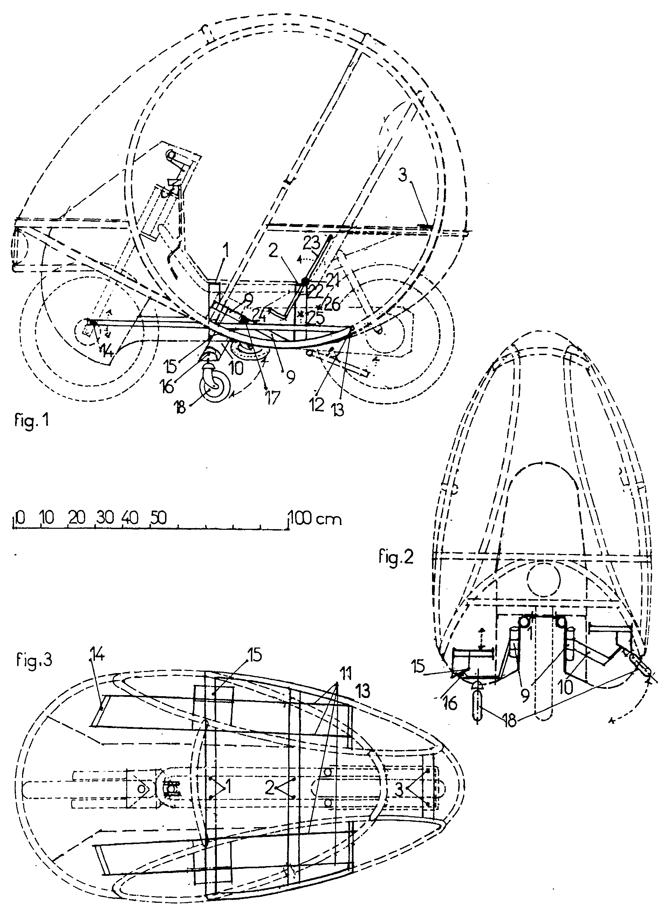

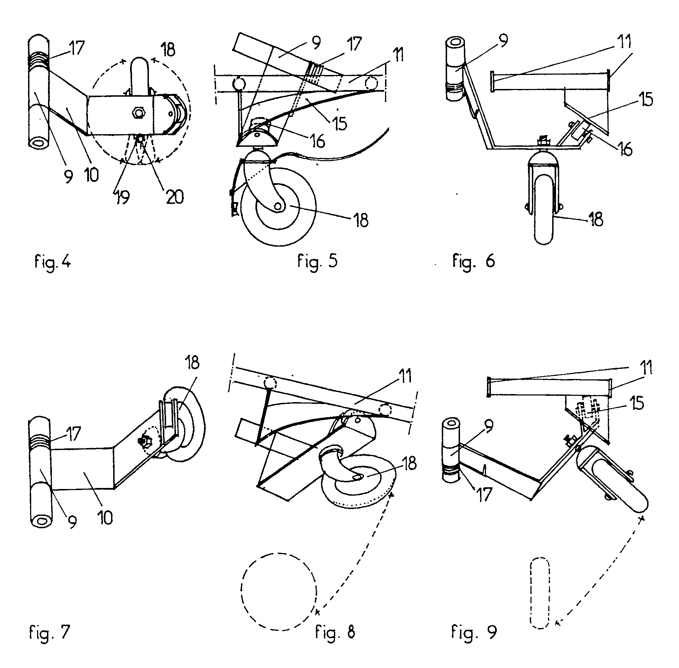

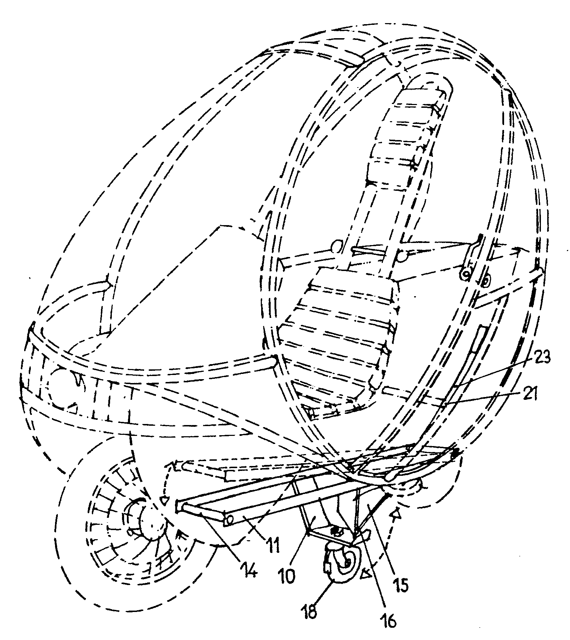

- planche n°1 représentant l'ensemble en plan et deux faces, indiquant en trait plein la structure selon l'invention, en pointillé très fin le chassis du véhicule. La figure 1 représente l'invention de profil, la figure 2 de face avant et la figure 3 en plan vu de dessus.
- planche n°2 représentant des détails d'éléments de l'invention. Les figures 4, 5 et 6 représentent le complexe de stabilisation en plan, profil et face, roulettes baissées et les figures 7,8 et 9 représentent le même complexe roulettes relevées.
- planche n°3 représentant une vue perspective du complexe de stabilisation, vue de l'avant dans la figure 12, avec en pointillés le volume général du véhicule.

Le dispositif de stabilisation est décomposé en deux parties : d'une part deux charnières, soudées sur un tube reliant les pattes de fixation (1) et (2), suivant un angle de 27 degrés environ vers l'arrière, avec deux bras en fer plat soudé (10) destinés à servir de support aux roues stabilisatrices, et d'autre part le levier de démultiplication (11), composé de deux bras en acier plat disposé verticalement, d'un axe en tube d'acier soudé sur la structure (12) avec une partie centrale en tube d'acier plein fixée par deux écrous (13), un tube d'acier devant servir de repose-pied à l'avant (14) et un plat légèrement débillardé au centre (15), soudé sur deux autres tubes assurant la rigidité. Cet élément (15) est destiné à agir sur une roulette (16) vissée sur des pattes soudées sur la partie extérieure des bras (9) de manière à retransmettre la force appliquée par le pied sur la pédale (14) au complexe de stabilisation, la roulette (16) étant légèrement penchée vers l'extérieur de manière à être à tout moment en contact avec la pièce (15). Le retour du bras métallique (10) est effectué automatiquement vers la position haute par l'intermédiaire d'un ressort (17) axé sur la charnière.

Les roulettes (18) fixées sur les bras métalliques (10) sont de type directionnel, à axe horizontal décentré par rapport à l'axe vertical, ce dernier étant monté sur roulement à billes de façon à permettre la libre direction des roulettes.

Afin toutefois de limiter la rotation de ces dernières autour de leur axe vertical, deux ressorts (19) avec une butée (20) sont axés de manière à permettre leur rotation mais aussi leur relèvement parallèlement aux parois du véhicule.

Au niveau de la fixation (2) du complexe sur le chassis, est soudé un tube (21), servant d'axe horizontal à un villebrequin (22), qui, actionné par l'une des mains du conducteur sur une branche extérieure (23) permet l'abaissement des leviers de démultiplication (11). Trois crans d'arrêt sont disposés : position route (24), position parking (25) et position frein de secours (26) par action sur deux cables de liaison avec des freins à patins disposés sur les roues stabilisatrices.

## Revendications

1. Dispositif de stabilisation de véhicule entièrement carrossé, fixé sur un chassis de motocyclette ou de cyclomoteur à deux roues porteuses, comprenant deux stabilisateurs (9 à 18) dont l'abaissement se fait par la pression volontaire des pieds du conducteur, le dispositif comportant une position "route", avec les stabilisateurs maintenus automatiquement en position haute à l'aide d'un ressort (17), une position "parking" ou "faible vitesse" avec les stabilisateurs maintenus en position basse, caractérisé en ce que l'abaissement des stabilisateurs est obtenu indépendamment l'un de l'autre par action sur deux pédales indépendantes, en ce que les stabilisateurs effectuent un mouvement d'avant en arrière, cela en s'acartant de l'axe du véhicule durant la phase de rétraction et en ce qu'il comporte un levier vilebrequin (22) actionnable à la main selon trois positions dont les deux premières correspondent aux positions "route" et "parking" et la troisième à la position "frein de secours", cette dernière étant obtenue à l'aide d'un cable actionnant un frein situé sur les roues directionnelles des stabilisateurs.

2. Dispositif selon la revendication 1 caractérisé en ce que le contact de la partie inférieure des stabilisateurs avec le sol se fait par l'intermédiaire d'une roue directionnelle (18), ou par l'intermédiaire d'un patin pour la conduite sur routes enneigées ou verglacées.

3. Dispositif selon l'une quelconque des revendications précédentes caractérisé en ce que le levier vilebrequin (22) peut régler la course des stabilisateurs et actionner le frein de secours (26).

4. Dispositif selon la revendication 1 caractérisé en ce que le complexe de stabilisation du véhicule peut se fixer sur un chassis de cyclomoteur ou de motocyclette par simple serrage de trois pattes de fixation (1), (2), (3).

## Claims

1. The apparatus of stabilization for completely enclosed véhicle, fixed to the frame of an auto-cycle or a motor-byke with two supporting wheels, having two stabilizers (9 to 18), of which the falling is done by the voluntary pressure of the driver's feet, this apparatus having a "road" position, with the stabilizers automatically maintained in a high position with the help of a spring (17), a "parking" or "slow speed" position with the stabilizers maintained in a low position, is characterized by the fact that the falling of the stabilizers is done of each other independantly by action on two independant pedals, by the fact that the stabilizers execute a from forward to backward movement, as well as turning aside of the axle of the véhicle during the phase of retraction and by the fact that it has an actionnable trace (22) by hand under three positions of which the two first correspond with the "road" and "parking" position and the third with the "emergency break" position, this last position being obtained with the help of a cable using a bit been on the steering wheels of the stabilizers.

2. The apparatus according to the claiming 1 is characterized by the fact that the contact of the underneath part of the stabilizer with the ground is made by a steering wheel (18) or by a ski for driving on snow or ice covered roads.

3. The apparatus according to either of above claimings is characterized by the fact that the brace (22) may regulate the stabilizers and put the emergency break into action.

4. The apparatus according to the claiming 1 is characterized by the fact that the stabilizer system may be fixed to the frame of an auto-cycle or a motor-byke by the single screwing of three fixations arms (1), (2), (3).

## Ansprüche

1. Vorrichtung zur Stabilisierung eines vollständig mit einer Karrosserie versehenen Fahrzeugs, montiert auf dem Chassis eines Motorrades oder Mopeds mit zwei tragenden Rädern, zwei Stabilisatoren umfassend (9 bis 18) , deren Herabsenkung durch den freiwilligen Druck des Fußes des Fahrers/Fahrzeugführers erfolgt; die Vorrichtung umfaßt eine Stellung "Fahrt" mit den Stabilisatoren, die automatisch in gehobener Stellung gehalten werden durch eine Spannfeder (17), eine Stellung "Parken" oder "Mindestgeschwindigkeit" mit am Boden gehaltenen Stabilisatoren, die die Besonderheit aufweisen, daß sie unabhängig einer vom anderen durch den Tritt auf zwei unabhängig funktionierende Pedalen herabgelassen werden, so daß die Stabilisatoren eine Bewegung von vorn nach hinten vollziehen, und diese, indem sie sich von der Achse des Fahrzeugs seitlich abspreizen während der Phase der Verkürzung und ausgestattet mit einer Kurbelwelle (22), von Hand zu bedienen nach den drei Stellungen, von denen die beiden ersten den Stellungen "Fahrt" und "Parken" entsprechen und die dritte der Stellung "Notbremse", diese letzte wird mit einem Kabel erreicht, das eine Bremse in Betrieb setzt, die auf den Steuerrädern der Stabilisatoren angebracht sind.

2. Vorrichtung gemäß Anforderung 1 mit der Besonderheit, daß der Kontakt des unteren Teils der Stabilisatoren mit dem Boden mittels eines Steuerrads (18) erfolgt, oder mittels einer Kufe für die Fahrt auf glatten oder verschneiten Fahrbahnen.

3. Vorrichtung gemäß aller o. g. Anforderungen und gekennzeichnet durch die Kurbelwelle (22), die die Fahrt der Stabilisatoren regulieren und die Notbremse in Betrieb nehmen kann (26).

4. Vorrichtung gemäß Anforderung 1 mit der Besonderheit, daß die Stabilisierungseinheit des Fahrzeugs auf dem Chassis eines Motorrades oder Mopeds befestigt werden kann, indem drei Befestigungsklammern festgeschraubt werden (1) , (2) , (3).

fig. 1

```
0   10   20  30  40  50              100 cm
```

fig.2

fig.3

fig. 4

fig. 5

fig. 6

fig. 7

fig. 8

fig. 9